(19) Europäisches Patentamt
European Patent Office
Office européen des brevets

(11) **EP 1 542 042 A1**

(12) **EUROPEAN PATENT APPLICATION**
published in accordance with Art. 158(3) EPC

(43) Date of publication:
15.06.2005 Bulletin 2005/24

(51) Int Cl.7: **G02B 5/08**, G09F 13/14,
B32B 27/32, F21V 8/00,
F21Y 103/00, F21S 2/00

(21) Application number: 03766631.0

(22) Date of filing: 23.07.2003

(86) International application number:
PCT/JP2003/009345

(87) International publication number:
WO 2004/013664 (12.02.2004 Gazette 2004/07)

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(30) Priority: 24.07.2002 JP 2002214682
11.10.2002 JP 2002298156
20.11.2002 JP 2002335917
08.04.2003 JP 2003103528

(71) Applicant: Yupo Corporation
Tokyo 101-0062 (JP)

(72) Inventors:
• Takahashi, Tomotsugu
  Chiyoda-ku, Tokyo 101-0062 (JP)
• Ueda, Takahiko, c/o Yupo Corp.
  Kashima-gun, Ibaraki 314-0102 (JP)
• Koyama, Hiroshi, c/o Yupo Corporation,
  Kashima-gun, Ibaraki 314-0102 (JP)
• Okawachi, Ichiro, c/o Yupo Corporation,
  Kashima-gun, Ibaraki 314-0102 (JP)

(74) Representative: Zimmermann & Partner
Postfach 33 09 20
80069 München (DE)

(54) **LIGHT-REFLECTING ARTICLE**

(57) An object of the present invention is to provide a light reflector, which causes no unevenness in luminance in the surface direction due to deflection in use. The present invention is a light reflector comprising: an olefin-based resin film 1 comprising a filler and having a total ray reflectance of 90% or more, which is stretched at least monoaxially at an area stretch ratio of from 1.5 to 80; and at least one of the following substrates (1) to (4):

(1) Film 2 comprising at least one of olefin-based resin and polyester-based resin as a main component;
(2) Woven cloth 3 or non-woven cloth 4;
(3) Metal plate 5; and
(4) Molded material 6 comprising a thermoplastic resin composition (a1) containing a foaming agent and having a foaming ratio of from 1.05 to 10 as calculated by the following equation (1):

$$\text{Foaming ratio} = \rho o/\rho \qquad (1)$$

where $\rho o$ represents the density before foaming; and $\rho$ represents the density after foaming.

Fig. 1

EP 1 542 042 A1

**Description**

<Technical Field>

The present invention relates to a light reflector which reflects light from a light source such as a fluorescent lamp in a backlight type area light source device. These devices have shown a trend for increase in size and for a light reflector which has a rigidity high enough to cause no unevenness in luminance in the surface direction due to deflection in use.

<Background Art>

In recent years, backlight type liquid crystal displays with a built-in light source and decorative illumination panels for printed matter have been widely distributed. Among backlight type built-in area light sources (hereinafter referred to as "backlight unit"), the configuration of side light type light source comprises a light pipe 13 having a halftone printed on a transparent acryl plate, a light reflector 11 disposed on one surface of the light pipe 13, a diffuser panel 14 disposed on the other surface of the light pipe 13 and a cold cathode lamp 15 (optionally 16) disposed close to the side of the light pipe as shown in Fig. 2. Light introduced into the light pipe from the side thereof is emitted at the halftone-printed area and the light reflector 11 reflects light in the direction of display and prevents the leakage of light in the direction toward the back surface so that uniform areal light is formed at the diffuser panel 14. In order to enhance illuminance with the increase in size of the display, there is a case where there are provided a plurality of cold cathode lamps such as 15 and 16, even a plurality of cold cathode lamps along the thickness of the light pipe.

In such a backlight unit, the light reflector has a high reflectance to allow efficient utilization of light from the light source and acts to realize display for various purposes. In general, since glittering specular reflection causes the occurrence of uneven illuminance and thus is disliked by users, it is necessary that the illuminance which is relatively uniform in the surface direction be realized by irregular reflection to give a natural feeling to viewers. In particular, the light reflector to be used in side light type liquid crystal display among liquid crystal displays is required to irregularly and uniformly reflect light which has passed out of the light pipe through the back side thereof.

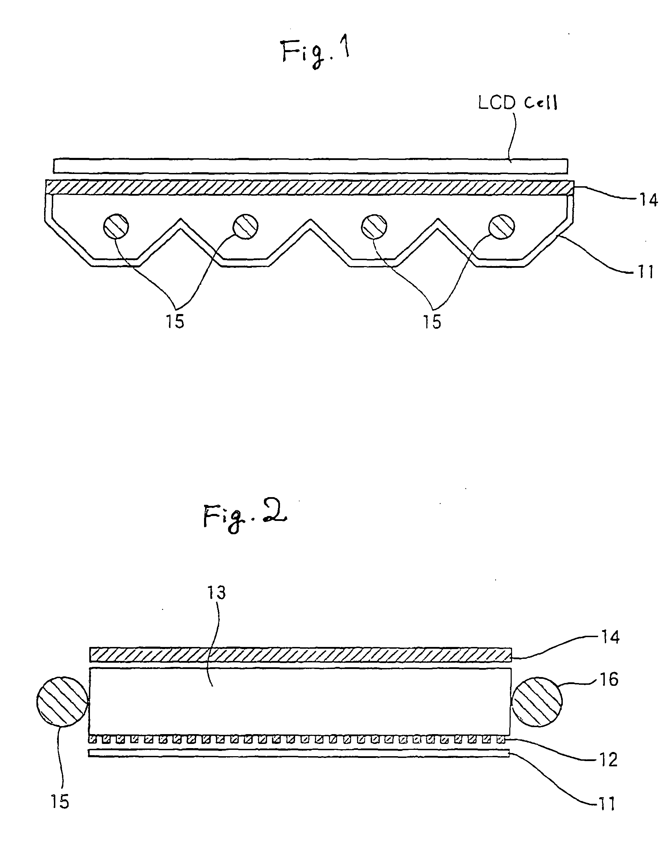

Further, for large-sized liquid crystal displays and decorative illumination signboards, a vertical lighting type backlight unit as shown in Fig. 1 is used, and it is folded or cut to meet the shape of the housing. The light reflector for a large-sized backlight unit has requirements for handleability as well.

For this application, a white polyester film as described in JP-A-4-239540 has heretofore been widely used, and the use of an expanded thermoplastic polyester as described in International Patent Disclosure No. 97/1117 has been recently proposed.

However, there was a case where the light reflector in the vicinity of the light source undergoes yellowing due to deterioration by heat generated by the light source and light having a wavelength mainly in the vicinity of ultraviolet range and this light reflector yellowing gives an illuminance drop after an extended period of time. Further, in the case where a relatively soft light pipe is used, the contact with the light reflector often causes flaws on the light pipe.

In order to eliminate these defects, it can be proposed to use an olefin-based thermoplastic resin film to reduce the illuminance drop and light pipe flaws over polyester for the purpose of the present invention. However, the olefin-based thermoplastic resin film has the disadvantage that it lacks rigidity and can be easily deformed to undergo deflection or strain as compared with polyester film, making it impossible to obtain reflected light which is uniform in the surface direction and hence causing the occurrence of uneven illuminance.

<Disclosure of the Invention>

An object of the present invention is to provide a light reflector which has a reduced illuminance drop and causes no uneven illuminance in the surface direction due to deflection during use (which is a defect of an olefin-based resin film). The present invention is an improvement over the light reflector made of a polyester which has heretofore been used.

The present inventors found that the aforesaid problems can be solved by a light reflector obtained by the lamination of an olefin-based resin film containing a filler to be used for the area that is provided with a long-range stable light-reflecting capacity and a specific substrate to be used for the area that is provided with a rigidity high enough to cause no deflection. With this combination, the present invention has thus been developed.

In other words, the present invention is a light reflector comprising: an olefin-based resin film 1 comprising a filler and having a total ray reflectance of 90% or more, wherein the olefin-based resin film 1 is stretched at least monoaxially at an area stretch ratio of from 1.5 to 80; and at least one of the following substrates (1) to (4):

(1) Film 2 comprising at least one of olefin-based resin and polyester-based resin as a main component;

(2) Woven cloth 3 or non-woven cloth 4;
(3) Metal plate 5; and
(4) Molded material 6 comprising a thermoplastic resin composition (a1) containing a foaming agent and having a foaming ratio of from 1.05 to 10 as calculated by the following equation (1):

$$\text{Foaming ratio} = \rho o/\rho \qquad (1)$$

where $\rho o$ represents the density before foaming; and $\rho$ represents the density after foaming.

<Brief Description of the Drawings>

Fig. 1 is a schematic sectional view of a typical vertical light type backlight unit.
Fig. 2 is a schematic sectional view of a plural light source type side light backlight unit.

<Best Mode for Carrying Out the Invention>]

The configuration and advantage of the light reflector of the present invention will be described in detail hereinafter. In the present invention, the term "~" means the contents described before and after this symbol and the range including the figures described before and after this symbol as minimum value and maximum value, respectively.

Olefin-based resin film 1

The olefin-based resin film 1 (hereinafter referred to as "film 1") constituting the light reflector of the present invention comprises an olefin-based resin and filler as main components.

Olefin-based resin

The kind of the olefin-based resin to be used in the film 1 constituting the light reflector is not specifically limited. For example, an ethylene-based resin such as high density polyethylene and middle density polyethylene, propylene-based resin, polymethyl-1-pentene or the like can be exemplified. These olefin-based resins may be used in admixture of two or more thereof. Among these olefin-based resins, the propylene-based resin and/or ethylene-based resin is preferably used from the standpoint of chemical resistance, cost, etc.
As the propylene-based resin, a propylene homopolymer or a copolymer of propylene with $\alpha$-olefin such as ethylene, 1-butene, 1-hexene, 1-heptene and 4-methyl-1-pentene may be used. The steric regularity is not specifically limited, and isotactic or syndiotactic polymers or those showing various degrees of steric regularity may be used. Further, the copolymer may be a binary, tertiary or quaternary polymer or may be a random copolymer or block copolymer.

Filler

As the fillers to be used in the film 1 there may be used various finely divided inorganic powders or organic fillers.
Examples of the finely divided inorganic powders include calcium carbonate, calcined clay, silica, diatomaceous earth, talc, titanium dioxide, barium sulfate, alumina, mica, etc. Preferred among these materials are calcium carbonate, talc, titanium dioxide, barium sulfate, alumina and mica.
Examples of the organic fillers include materials having no compatibility with an olefin-based resin and a higher melting point (e.g., 170 to 300°C) or a higher glass transition temperature (e.g., 170 to 280°C) than olefin-based resin, such as polyethylene terephthalate, polybutylene terephthalate, polycarbonate, nylon-6, nylon-6, 6, cyclic olefin polymer and copolymer of cyclic olefin with ethylene.
The aforesaid finely divided inorganic powders or organic fillers may be used singly or in combination of two or more thereof. In the case where two or more of these materials are used in combination, the finely divided inorganic powders and the organic fillers may be combined.
These fillers cause the production of fine pores in the film 1 when the film 1 is stretched as described later. In order to adjust the size of pores thus produced, it is preferred that the average particle diameter of the aforesaid finely divided inorganic powder to be used and the average dispersed particle diameter of the organic filler to be used each fall within the range of from 0.1 to 8 $\mu$m, more preferably from 0.3 to 5 $\mu$m. In the case where the average particle diameter or average dispersed particle diameter is less than 0.1 $\mu$m, there is a tendency that the desired pore (porosity) cannot be obtained. On the contrary, in the case where the average particle diameter or average dispersed particle diameter is more than 8 $\mu$m, there is a tendency that the pores are uneven.

Further, in order to form pores suitable for uniform light reflectivity, it is effective to use a filler free of coarse particles having, e.g., a specific surface area of 20, 000 cm$^2$/g or more and a particle diameter of 10 $\mu$m or more (value measured by a laser diffraction type particle counter "MicroTrack").

In order to adjust the amount of pores to be produced by stretching the film 1 as mentioned later, the content (percent content) of the aforesaid filler in the film 1 is preferably from 5 to 75% by weight, more preferably from 10 to 70% by weight. To this end, the content of the olefin-based resin constituting the film 1 is preferably from 25 to 95% by weight, more preferably from 30 to 90% by weight. The content of filler is represented by the proportion of filler in the raw material in the entire film 1 as calculated in terms of % by weight.

In the case where the content of filler is less than 5% by weight, there is a tendency that the predetermined pore (porosity) cannot be obtained. On the contrary, in the case where the content of filler is more than 75% by weight, there is a tendency that the surface of the film 1 and the light pipe can be easily flawed.

Configuration of film 1

The film 1 may have a single layer structure or multilayer structure. From the standpoint of degree of freedom of capability properly selecting formulation of raw materials and providing functions during film formation, the film 1 preferably has a multilayer structure. In the case where the multilayer structure consists of three layers, i.e., surface layer/interlayer /back layer and the main resin constituting the interlayer is a propylene-based resin, it is preferred that there be incorporated an ethylene-based resin having a lower melting point than propylene-based resin such as polyethylene and ethylene vinyl acetate in an amount of from 3 to 25% by weight to improve the stretchability thereof. Further, the interlayer may comprise titanium dioxide incorporated therein as a finely divided inorganic powder in an amount of from 0.5 to 10% by weight, preferably from 0.5 to 8.5% by weight. Further, the surface layer and the back layer each may comprise titanium dioxide incorporated therein as a finely divided inorganic powder in an amount of less than 1% by weight, preferably from 0.1 to 0.9% by weight. In this case, titanium dioxide is incorporated to effectively prevent the deterioration of the light reflector due to light having a wavelength range in the vicinity of ultraviolet range. However, when the content of titanium dioxide in the interlayer and the surface layer and back layer exceed 10% by weight and 1% by weight, respectively, there is a tendency that the whiteness of the light reflector can be affected causing a drop in illuminance as well as the obscuration of color tone and contrast of liquid display, etc.

The thickness of the film 1 is preferably from 20 to 500 $\mu$m, particularly from 30 to 300 $\mu$m. In the case where the film 1 has a three-layer structure as mentioned above, the thickness of the surface layer and the back layer each are 0.1 $\mu$m or more, preferably from not smaller than 0.1 $\mu$m to less than 25 $\mu$m, and less than 15%, preferably from 0.1 to 10% of the total thickness of the film 1. In the case where the thickness of the film 1 is less than 20 $\mu$m, there is a tendency that light can pass therethrough. Further, in the case where the thickness of the film 1 is more than 500 $\mu$m, the light reflector is disadvantageously thick.

Additives

The film 1 may comprise a fluorescent brighter, a stabilizer, alight-stabilizer, a dispersant, alubricant, etc. incorporated therein as necessary. The stabilizer may be a stabilizer such a sterically hindered phenol, phosphorus-based and amine-based stabilizers in an amount of from 0.001 to 1% by weight, as the light-stabilizer there may be incorporated a light-stabilizer such as a sterically hindered amine, benzotriazole-based and benzophenone- based stabilizers in an amount of from 0.001 to 1% by weight, and as the filler dispersant there may be incorporated a silane coupling agent, a higher aliphatic acid such as oleic acid and stearic acid, metal soap, polyacrylic acid, polymethacrylic acid, salt thereof or the like in an amount of from 0.01 to 4% by weight.

Stretching

As a method of forming the film 1, an ordinary monoaxial stretching method or a biaxial stretching method may be used. Specific examples of the stretching method include a method which comprises extruding a molten resin into a film using a single-layer or multilayer T-die or I-die connected to a screw extruder, and then monoaxially stretching the film in the longitudinal direction using the difference in circumferential speed between rolls, a biaxial stretching method comprising the monoaxial stretching method combined with subsequent crosswise stretching using a tenter oven, and a simultaneous biaxial stretching method involving the combined use of a tenter oven and a linear motor.

The method of forming the film 1 is not specifically limited so far as the film 1 is stretched at least monoaxially to obtain the aforesaid pore (porosity). In order to easily obtain a proper porosity, the biaxial stretching method, which can adjust the area stretching factor described later within a broader range, is effective.

The stretching temperature is 2 to 60°C lower than the melting point of the olefin-based resin, and when the resin is a propylene homopolymer (melting point: 155 to 167°C), the stretching temperature is preferably from 152 to 164°C, and when the resin is a high density polyethylene (meltingpoint: 121 to 134°C), the stretching temperature is preferably from 110 to 120°C. Further, the stretching speed is preferably from 20 to 350 m/min.

In order to adjust the size of pores to be produced in the film 1, the area stretching factor is from 1.5 to 80, preferably from 3 to 70, more preferably 25 to 60. In the specification, the area stretching factor means the stretching factor itself in the case of monoaxial stretching and the product of stretching factors in the respective stretching directions in the case of biaxial stretching.

When the area stretching factor falls below 1.5, pore (porosity) or pore size great enough to obtain a sufficient light reflectance can be difficultly obtained, giving a tendency toward drop of light reflectance. On the contrary, when the area stretching factor exceeds 80, the film 1 can easily break during stretching to disadvantage. In the case where the film 1 to be used in the light reflector of the present invention has a multilayer structure, the greatest area stretching factor of the various layers is defined as the area stretching factor of the film 1.

Further, in order to adjust the amount of pores to be produced per unit volume in the film 1, the porosity is preferably from 15 to 70%, more preferably from 20 to 55%. In the case where the porosity falls below 15%, a sufficient light reflectance cannot be obtained, and in the case where the porosity exceeds 70%, stable stretching of the film 1 is difficult.

In the specification, the porosity means the value calculated by the following equation (2). In this equation, $\rho 0$ means true density, and $\rho$ means density (JIS-P8118) .

$$\text{Porosity (\%)} = (\rho o' - \rho')/ \rho o' \times 100 \qquad (2)$$

where $\rho o'$ represents the density before stretching; and $\rho'$ represents the density after stretching.

The true density is almost equal to the density before stretching unless the material to be stretched contains a large amount of air.

The total light reflectance of the film 1 of the present invention is 90% or more, preferably 93% or more, particularly preferably from 95 to 100%. In the case where the total light reflectance falls below 90%, the film 1 cannot sufficiently act as a light reflector. The total light reflectance as used in the specificationmeans the value obtained by averaging the reflectance measured at various wavelengths of from 400 nm to 700 nm according to the method described in JIS-Z8722.

The gloss of the film 1 of the present invention is preferably 45% or less, more preferably 30% or less, particularly preferably 20% or less. When the gloss of the film 1 exceeds 45%, the resulting specular reflection can easily cause the occurrence of uneven illuminance in display or other devices using the light reflector of the present invention. The gloss as used in the specification means the value measured when the angle of incidence and reception is 20° with respect to normal to the surface of the sample according to the method described in JIS-P8142.

The density of the film 1 of the present invention is normally from 0.5 to 1.2 g/cm$^3$, and the more the content of pores is, the smaller is the density and hence porosity. when the porosity is greater, the reflectivity of the surface of the film 1 can be enhanced more.

Protective layer 8

The film 1 thus stretched can be used as a constituent of the light reflector of the present invention itself but may be provided with a protective layer 8 on at least one side thereof to prevent the occurrence of flaws or staining which is likely during forming, working and use so far as the optical properties thereof cannot be impaired.

Examples of the method of forming the protective layer include a method which comprises co-extruding the molten raw material of the protective layer and the raw material of the film 1 using a multilayer T-die or I-die before the stretching of the film 1, and then stretching the laminate thus obtained, a method which comprises laminating the molten raw material of the protective layer on the extruded film 1 after monoaxial stretching in the case where the film 1 is biaxially stretched, and then further stretching the laminate, and a method which comprises directly or indirectly spreading the coating solution of the raw material of the protective layer over the film 1 which has been biaxially stretched, and then drying or curing the coated material.

As the raw materials of the protective layer to be monoaxially or biaxially stretched at the same time with the aforesaid film 1 the same olefin-based resin and filler as used in film 1 may be used. Further, the aforesaid additives may be used.

Examples of the protective layer to be provided by spreading the raw material coating solution after the stretching of the film 1 include silicon-based materials and fluorine-based materials. The present protective layer may be further formed on the protective layer provided at the same time with the stretching of the aforesaid film 1.

The spreading method, if employed, is carried out by using a roll coater, blade coater, bar coater, air knife coater, size press coater, gravure coater, reverse coater, die coater, lip coater, spray coater or the like. If necessary, smoothing is conducted. A drying step is then conducted to remove extra water content or hydrophilic solvent. Curing is then conducted using heat, light or an electron beam to form a protective layer.

The protective layer for the light reflector of the present invention is preferably formed to a thickness of from 0.2 to 80 $\mu$m, more preferably from 1 to 60 $\mu$m per one side so that the optical properties of the film 1 cannot be impaired.

Further, a metal layer may be provided on at least one side of the protective layer, particularly on the side thereof opposed to the substrate, with an anchor coat layer interposed therebetween for the purpose of preventing light from passing through the protective layer. In some detail, it is usually practiced to spread a polyester-based or polyurethane-based anchor coating agent in a dry amount of from 0.03 to 5 g/m$^2$ and then provide a metal layer on the surface of the coating by a method such as vacuum metallization, metal sputtering, hot-stamping and hot stamping.

The metal to be used herein is normally aluminum. The thickness of the metal layer is preferably from 0.025 to 0.5 $\mu$m, more preferably from 0.03 to 0.1 $\mu$m.

Substrate

The substrate of the present invention is used to provide the light reflector with strength and is adapted to make up for the lack of rigidity of the olefin-based resin film 1, with none of the disadvantages of the olefin-based resin film 1 and is laminated on the film 1 to provide a light reflector which has no unevenness in illuminance in the surface direction due to deflection during use. Any one of the following materials (1) to

(4) may be used as the substrate:

(1) Film 2 comprising at least one of olefin-based resin and polyester-based resin as a main component;
(2) Woven cloth 3 or non-woven cloth 4;
(3) Metal plate 5; and
(4) Molded material 6 comprising a thermoplastic resin composition (a1) containing a foaming agent and having a foaming ratio of from 1.05 to 10 as calculated by the following equation (1):

$$\text{Foaming ratio} = \rho o/\rho \tag{1}$$

where po represents the density before foaming; and $\rho$ represents the density after foaming.

Besides the aforesaidmaterials, sheets impregnated or coated with a phenolic resin, epoxy resin, melamine resin or the like or sheets of resin such as polystyrene and polycarbonate may be used as the substrate capable of providing rigidity.

(1) Film 2 comprising at least one of olefin-based resin and polyester-based resin as a main component

As the film 2 comprising at least one of olefin-based resin and polyester-based resin as a main component to be used in the present invention (hereinafter referred to as "film 2"), an ordinary film comprising an olefin-based resin or polyester-based resin as a main component is used. The film 2 is used to provide the light reflector of the present invention with rigidity and thus is preferably stretched in one or more axial directions.

As the olefin-based resin of the film 2, the same one as used in the film 1.

As the polyester-based resins of the film 2 there may be used thermoplastic polyester-based resins such as polyethylene terephthalate, copolymer thereof, polyethylene naphthalate and aliphatic polyester, singly or in admixture of two or more thereof may be used.

Further, the film 2 may comprise the same various finely divided inorganic powders or organic fillers as used in the film 1 incorporated therein.

The film 2 is formed by the same stretching method as used for the film 1. The thickness of the film 2 is from 20 to 400 $\mu$m, preferably from 25 to 300 $\mu$m for the purpose of providing the light reflector of the present invention with rigidity and from the standpoint of usage.

(2) Woven cloth 3 or non-woven cloth 4

The woven cloth 3 to be used in the present invention is a plain cloth having a basis weight of from 40 to 200 g/m$^2$ obtained by plain-weaving warp and woof having from 40 to 150 denier, preferably from 50 to 100 denier in such a manner that they cross each other every one line per 50 to 140 lines, preferably 60 to 100 lines per 2.54 cm.

As the material of warp and woof of the plain cloth 3, nylon 6, nylon 6, 6, polyethylene terephthalate, cotton, rayon, polyacrylonitrile, polyethylene fluoride, polypropylene, polyvinylidene fluoride or the like may be used.

As the non-woven cloth 4 to be used in the present invention, a resin-reinforced sheet obtained by heat-pressing a non-woven cloth comprising short fibers entangled with each other is used. The resin-reinforced sheet is produced by dispersing open short fibers of thermoplastic resin such as polyethylene, polypropylene, polyamide and polyester (fiber thickness: 0.2 to 15 denier; fiber length: 1 to 20 mm) in water, subjecting the dispersion as a paper material in a paper making process of use of a paper making machine, and then heat-pressing the paper thus produced under a roller press.

During this paper making, pulp-shaped particles may be incorporated in the water dispersion in a proportion of from 10 to 90% by weight. Examples of the material of the pulp-shaped particles include aromatic polyamides, aromatic polyesters, etc. Further, a polyvinyl alcohol fiber-like binder or a thermoplastic resin powder such as polyethylene, polyester, polyamide and polypropylene may be incorporated in the water dispersion as a short fiber binder in an amount of from 5 to 30% by weight. Further, a pigment, a plasticizer, an adhesion adjustor, a dispersant, etc. may be incorporated in the water dispersion.

The basis weight of the non-woven cloth 4 is preferably from 12 to 30 g/m$^2$ from the standpoint of enhancement of strength and balance of handleability and cost.

Further, the non-woven cloth 4 thus obtained may be sprayed with a thermoplastic resin powder and/or laminated with a thermoplastic resin sheet, and then heat-pressed so that they are integrated to produce a non-woven cloth 4. Examples of the thermoplastic resin which is the raw material of the powder and sheet include polyethylene, polypropylene, polyvinyl chloride, polyvinylidene chloride, polystyrene, styrenebutadiene-acrylonitrile copolymer, polyamide, copolymerized polyamide, polycarbonate, polyacetal, polymethyl methacrylate, polysulfone, polyphenylene oxide, polyester, copolymerized polyester, polyphenylene sulfide, polyether sulfone, polyetherimide, polyamideimide, polyimide, polyurethane, polyetherester, polyetheramide, and polyesteramide, and these thermoplastic resins may be used in admixture of two or more thereof.

Further, the non-woven cloth 4 may be a non-woven synthetic paper obtained by exposing a web composed of irregularly arranged filaments of crystalline and oriented synthetic organic polymer at least 75% by weight of which is fiber denier to a heated fluid which doesn't dissolve the filament therein so that the filaments are self-connected at many intersecting points disposed at a spatial interval.

Such a non-woven synthetic paper is produced by self-connecting filaments while keeping the temperature of the entire web uniform so that the shrinkage of the filaments is suppressed to 20% or less and the drop of birefringence of the filaments is suppressed to 50% or less, and then thereafter lowering the temperature of the entire web to a value at which the shrinkage of the filaments can be sufficiently prevented.

(3) Metal plate 5

As the metal plate 5 to be used in the present invention, a steel plate, a zinc-plated steel plate, a chromium-plated steel plate, a stainless steel plate, an aluminum plate, an aluminum-copper alloy plate, an aluminum-manganese alloy plate, a magnesium alloy plate, a titanium plate, a titanium alloy plate or product obtained by subjecting these plates to surface treatment may be used.

In particular, an aluminum plate, an aluminum-magnesium alloy plate, an aluminum-manganese alloy plate or a magnesium alloy plate is preferably used to meet the requirements for housing of light reflector, i.e., rigidity, light weight, thermal conductivity, workability, etc.

(4) Molded material 6 comprising a thermoplastic resin composition (a1) containing a foaming agent and having a foaming ratio of from 1.05 to 10

The molded material 6 having a foaming ratio of from 1. 05 to 10 to be used in the present invention (hereinafter referred to as "composition 6") comprises a thermoplastic resin composition (a1) containing a foaming agent.

The molded material 6 is formed singly by a layer made of a thermoplastic resin composition (a1) containing a foaming agent or formed by a layer made of a thermoplastic resin (a1) containing a foaming agent and a layer made of a thermoplastic resin composition (a2) containing a filler.

In the case where the molded material 6 comprises a layer made of a thermoplastic resin (a1) containing a foaming agent and a layer made of a thermoplastic resin composition (a2) containing a filler, the molded material 6 is obtained by laminating the two molten materials in a die, and then co-extruding the two layers to form a multilayer structure.

Examples of the thermoplastic resin to be used in the thermoplastic resin (a1) containing a foaming agent and the thermoplastic resin composition (a2) containing a filler include ethylene-based resins such as propylene-based resin, high density polyethylene, middle density polyethylene, low density polyethylene, linear low density polyethylene, ethylene-vinyl acetate copolymer, ethylene-acrylic acid copolymer, ethylene-methacrylic acid alkyl ester copolymer and ionomer (metal salt of ethylene-acrylic acid copolymer, metal salt of ethylene-methacrylic acid copolymer), olefin-based resins such as polymethyl-1-pentene and ethylene- cyclic olefin copolymer, polyamide-based resins such as nylon-6, nylon-6, 6, nylon-6, 10 and nylon-5, 12, ester- based resins such as polyethylene terephthalate, copolymer thereof, polyethylene naphthalate and aliphatic polyester, and thermoplastic resins such as polycarbonate, atactic polystyrene, syndiotactic polystyrene and polyphenylene sulfide. These thermoplastic resins may be used in admixture of two or more thereof.

Among these thermoplastic resins, olefin-based resins are preferably used, and propylene-based resins and/ or ethylene-based resins are more preferably used from the standpoint of chemical resistance, cost, etc.

As the propylene-based resins, the same propylene-based resins as exemplified above may be used.

The foaming agent to be incorporated in the thermoplastic resin composition (a1) is not specifically limited so far as it doesn't deviate from the spirit of the present invention. As the foaming agent, chemical foamingagentsor physicalfoamingagents are exemplified. Specific examples of the chemical foaming agents include azodicarbonamide, azobis isobutyronitrile, diazoaminobenzene, N,N'-dinitroso pentamethylenetetramine, diazoaminobenzene, N,N'-dimethyl-N,N'-dinitroterephthalamide, benzenesulfonyl hydrazide, p-toluenestyrenesulfonylhydrazide, p,p'-oxybisbenzenesulfonylhdyrazide, sodium bicarbonate, sodium citrate, and mixture thereof. Specific examples of the physical foaming agent to be incorporated in the thermoplastic resin composition (a1) include propane, butane, pentane, dichloromonofluoromethane, dichloro difluoromethane, dichlorodifluoromethane, trichloro monofluoromethane, and inert gas such as nitrogen and carbon dioxide gas. Further, two or more of these foaming agents may be used in combination and may be used in combination with commonly used compounds such as foaming aid, crosslinking agent and nucleating agent, and the foaming agent may be a crosslinked product.

As the thermoplastic resin composition (a2), filler may normally be used. As the filler, a finely divided inorganic powder and/or organic filler as in the case of the film 1 maybe used. Specific examples of the filler employable herein include finely divided inorganic powders such as calcium carbonate, magnesium carbonate, calcium hydroxide, magnesium hydroxide, aluminum hydroxide, aluminum hydroxide, aluminum phosphate, talc, mica, calcined clay, carbon black, graphite, zeolite, aluminum sulfate, barium sulfate, anhydrous calcium silicate, diatomaceous earth, titanium dioxide, alumina and silica having a particle diameter of from 0.05 to 30 $\mu$m.

Preferred among these fillers are calcium carbonate, talc, titanium dioxide, barium sulfate, and mica.

Examples of the organic filler include polyester resins such as polyethylene terephthalate and polybutylene terephthalate having a particle diameter of from 0.5 to 2,000 $\mu$m, polyamide resins such as polycarbonate resin, nylon-6 and nylon-6,6, polyolefin resins such as phenol resin, cyclic olefin polymer and copolymer of cyclic olefin and ethylene, and resin powders having no compatibility with thermoplastic resin which is a main component and a higher melting point or glass transition temperature than thermoplastic resin, such as ebonite.

Further, the thermoplastic resin composition (a2) containing a filler may comprise a glass-based, pulp-based, asbestos-based, polyester-based, polyamide -based or like fiber having a diameter of from 3 to 30 $\mu$m and a length of from 1 to 10 mm incorporated therein as a fiber-like filler.

The amount of the filler to be incorporated in the thermoplastic resin composition (a2) is from 0 to 80% by weight, preferably from 1 to 60% by weight. In the case where the thermoplastic resin composition (a2) comprises no filler incorporated therein, the layer formed by the thermoplastic resin composition (a2) can be provided on the both sides of the thermoplastic resin composition (a1) layer having bubbles formed therein with a foaming agent to level the unevenness on the surface layer formed by bubbles. Further, by incorporating a filler in the thermoplastic resin composition (a2), the wavy deformation (corrugate) caused by the volumetric expansion due to the expansion of the thermoplastic resin composition (a1) containing a foaming agent during extrusion can be effectively inhibited, making it possible to cool the film uniformly. Further, easy occurrence of streak in parallel to the direction of flow of film (machine direction) can be inhibited, making it possible to form a uniform laminate in the case where the molded material 6 is thermally laminated with the film layer 1 or the back layer 9 described in detail later and hence prevent the occurrence of defective external appearance such as wrinkle and creeping/blobbing. When the filler content exceeds 80% by weight, the melt viscosity is too high, lowering the flow properties and making extrusion difficult.

The thermoplastic resin composition (a1) containing a foaming agent and the thermoplastic resin composition (a2) containing a filler may comprise a slipping agent such as oxidation inhibitor, coloring agent, ultraviolet absorber, antistatic agent, dispersant, nucleating agent, plasticizer, metal salt of aliphatic acid and aliphatic acid amide incorporated therein as necessary.

The molded material 6 has bubbles formed therein which have been produced by the expansion of the foaming agent in the thermoplastic resin composition (a1) when extruded out of die. The foaming ratio is preferably from 1.05 to 10, particularly preferably from 1.7 to 8. In the case where the foaming ratio falls below 1.05, the weight of the molded material cannot be sufficiently reduced. On the contrary, when the foaming ratio exceeds 10, the molded material can be difficult to form into a film.

In the specification, the foaming ratio means the value calculated by the following equation (1). In the equation (1), $\rho o$ represents true density and $\rho$ represents density (JIS-P8118).

$$\text{Foaming ratio} = \rho o / \rho \qquad (1)$$

where $\rho o$ represents the density before foaming; and $\rho$ represents the density after foaming.

In the case where the molded material 6 is formed by the thermoplastic resin composition (a1) containing a foaming agent and the thermoplastic resin composition (a2) containing a filler, a method which comprises laminating the two thermoplastic resin compositions in molten form before being extruded through a T-die. In general, a multi-manifold process which comprises melt-kneading the two resins in separate extruders, and then laminating the two resins thus melt-kneaded in a T-die or a multilayer T-die process such as feed block process involving lamination before feeding the materials into T-die may be used. Preferably, the two resin compositions are co-extruded through a T-die in such a manner that the thermoplastic resin composition (a2) containing a filler is laminated on the both sides of the thermoplastic resin composition (a1) containing a foaming agent.

The thickness of the molded material 6 is from 50 to 4,900 $\mu$m, particularly preferably from 50 to 3,000 $\mu$m. In the case where the molded material 6 is formed by the thermoplastic resin composition (a1) containing a foaming agent and the thermoplastic resin composition (a2) containing a filler, the proper ratio of the thickness of the thermoplastic resin composition (a1) layer containing a foaming agent to the thermoplastic resin composition (a2) layer containing a filler differs with the constituent materials and conditions such as foaming ratio. However, the thickness of the thermoplastic resin composition (a2) layer containing a filler is preferably from about 0 to 70%, particularly preferably from 0 to 50% of the total thickness of the molded material 6. In the case where the proportion of the thickness of the thermoplastic resin composition (a2) containing a filler in the total thickness of the molded material 6 exceeds 70%, the weight of the light reflector cannot be sufficiently reduced.

The thickness as used in the specification was measured by the method described in JIS-P8118.

Backing layer 9

In the light reflector of the present invention, a backing layer 9 may be laminated on the substrate used (preferably on the side thereof opposite the film 1) as necessary.

The backing layer 9 is provided to adjust the final thickness or nerve of the light reflector, provide processability such as capability of being printed on back surface or prevent flying of lint in the case where the woven cloth 3 or non-woven cloth 4 is used as substrate.

As the backing layer 9, an ordinary film comprising an olefin-based resin or polyester-based resin as a main component is used. The backing layer 9 may or may not be stretched but is preferably stretched in one or more axial directions because it is used to adjust rigidity.

As the olefin-based resin of the backing layer 9, the same olefin-based resin as used in the film 1 may be used.

As the polyester-based resins of the backing layer 9, thermoplastic polyester-based resins such as polyethylene terephthalate, copolymer thereof, polyethylene terephthalate and aliphatic polyester, singly or in admixture of two or more thereof may be used. Further, as the backing layer 9, the same finely divided inorganic powders and/or organic fillers as used in the film 1 in combination with the aforesaid resins may be used.

The backing layer 9 is formed by the same stretching method as used in the film 1. The thickness of the backing layer 9 is preferably from 20 to 400 $\mu$m, more preferably from 25 to 300 $\mu$m for the purpose of providing the light reflector of the present invention with rigidity.

Lamination

The light reflector of the present invention is formed by laminating the aforesaid film 1 and substrate on each other. For the lamination of the film 1 and substrate on each other, some methods are used with the interposition of the binder layer 7.

Binder layer 7

The binder layer 7 of the present invention is an adhesive layer which is interposed between the film 1 and the substrate to bond the two layers directly to each other or an easily bondable layer which is provided on the substrate to enhance the adhesion to the film 1.

In particular, in the case where the binder layer 7 acts as an adhesive layer, these adhesive layers are made of an ordinary adhesive, heat-sealable adhesive, pressure-sensitive adhesive or the like. Examples of the method of providing such an adhesive layer include one properly selected from the group consisting of coating method, melt lamination method, extrusion lamination method, dry lamination method, thermal lamination method and heat fusion method or combination thereof.

The adhesive or self-adhesive agent to be used in the binder layer 7 of the present invention is not specifically limited so far as it doesn't deviate from the spirit of the present invention, but examples of ordinary adhesives include polyether polyol-polyisocyanate adhesive, polyester polyol-polyisocyanateadhesive, etc. The adhesive may be spread over one side of a resin film or substrate, and then dried to form a binder layer 7 which is then subjected to dry lamination using nip rolls or press so that it is pressure-sensitive bonded to the other component to make lamination.

Examples of the heat-sealable adhesive include heat-sealable thermoplastic resins such as ethylene-based resins, e.g., propylene-based resin, low density polyethylene, linear low density polyethylene, ethylene-vinyl acetate copolymer (preferably ethylene-vinyl acetate copolymer having a vinyl acetate content of 12% by weight or less), ethylene-acrylic acid copolymer (preferably ethylene-acrylic acid copolymer having an ethylene content of from 65 to 94% by weight), ethylene-methacrylic acid copolymer, ethylene-methacrylic acid alkyl ester copolymer, ionomer (metal salt of ethylene-acrylic acid copolymer, metal salt of ethylene-methacrylic acid copolymer), ethylene-propylene copolymer and ethylene-propylene-butene-1 copolymer and vinyl chloride-vinyl acetate copolymers. These heat-sealable adhesives may be subjected to extrusion lamination to form a binder layer 7 on the substrate layer or film 1.

Representative examples of the adhesive include rubber-based adhesives, acryl-based adhesives, and silicone-based adhesives. Referring to morphology, a solvent type or emulsion type adhesive may be spread over one side of the film 1 or substrate by a known method, and then dried and solidified to form a binder layer 7.

The amount of the adhesive or self-adhesive agent to be used as binder layer is from 0.5 to 100 $g/m^2$, preferably from 0.5 to 50 $g/m^2$ as calculated in terms of dried amount.

Further, in order to prevent light from passing through the light reflector, it is also made possible to use an adhesive having a pigment such as titanium white incorporated therein. Moreover, an adhesive having a fire retardant incorporated therein may be used.

Further, in the case where the adhesive or self-adhesive agent is used, an easily bondable layer maybe provided on the substrate as a binder layer 7 before application of the adhesive or self-adhesive agent at a separate step at the same time wi th or after the formation of the substrate for the purpose of enhancing the adhesion to the adhesive or self-adhesive agent.

In this case, the film 1 and the binder layer 7 which is an easily bondable layer on the substrate are laminated on each other with the adhesive layer or self-adhesive agent layer interposed therebetween.

Binder layer 10

In the light reflector of the present invention, in the case where the aforesaid backing layer 8 is laminated on the substrate, the backing layer 9 and the substrate may be laminated on each other with the binder layer 10 interposed therebetween.

The binder layer 10 may be formed by the same composition as that of the binder layer 9 and may be provided by the same method as for the binder layer 9.

Further, the binder layer 10 may be used also as adhesive layer or easily bondable layer similarly to the binder layer 9.

Lamination of film 1 and metal plate 5

In the present invention, as the method of laminating the film 1 and the metal plate 5, several methods may be used. These methods include a method which comprises heat-fusing a resin film to a metal plate 5 with a heat-modifiable resin layer obtained as a binder layer 7 by heat treatment of a coat layer of epoxy resin, aliphatic acid or hydroxy-substituted phenol formed on the metal plate and interposed between the metal plate and the resin film, a method which comprises superposing a film 1 produced by lamination of heat-sealable adhesive layers on the surface of a metal plate which has been heated to a temperature of not lower than the softening temperature of the heat-sealable adhesive, and then contact-pressing the laminate using nip rolls or press to make heat fusion and a method which comprises contact-pressing the two components with a double-sided adhesive tape so that they are pressure-sensitive bonded to each other or the like.

Lamination of film 1 and molded material 6

Referring to the method of laminating the film 1 and the composition 6 in particular in the present invention, there is a case where the composition 6 has a single layer made of the thermoplastic resin composition (a1) containing a foaming agent and a case where the composition 6 is formed by a layer made of the thermoplastic resin composition (a1) containing a foaming agent and a layer made of the thermoplastic resin composition (a2) containing a filler. However, in any case, a thermal lamination method is effectively used which comprises pressure-fusing the film 1 to at least one side of the composition 6 via a block of rolls such as metal roll and rubber roll by making the use of the heat of the film-like composition 6 extruded through a die while the composition is in a melted state. This method has the advantage that it makes it possible to cause the film 1 to inhibit wavy deformation (corrugate) of the composition 6.

In the case where the binder layer 7 and the binder layer 10 are made of a heat-sealable thermoplastic resin, a multi-manifold process which comprises melting and kneading the foaming agent-containing thermoplastic resin composition (a1) or the foaming agent-containing thermoplastic resin composition (a1) and the filler-containing thermoplastic resin composition (a2) constituting the composition 6 and the heat-sealable thermoplastic resin composition (a3) to be used in the binder layer 7 and the binder layer 10 in separate extruders. Then laminating these layers in a T-die in such a manner that the thermoplastic resin composition (a3) is an outermost layer. A multilayer T-die process such as feed block process involving lamination before feeding the materials into T-die may be used. Further, a method which comprises forming the composition 6 into film, and then subjecting the thermoplastic resin composition (a3) to extrusion lamination so that it is laminated on the film may be used.

In any of the aforementioned cases, a thermal lamination method may be used which comprises pressure-fusing the film 1 to at least one side of the composition 6 via a block of rolls such as metal roll and rubber roll by making the use of the heat of the thermoplastic resin composition (a3) which has been extruded through a die to form a binder layer 7 and a binder layer 10 while the composition is maintained in a melted state.

As the thermoplastic resin to be used in the binder layer 7 and the binder layer 10 there may be used the same resin as the aforesaid heat-sealable thermoplastic resin.

In the case where the binder layer 7 and the binder layer 10 are formed by an adhesive or self-adhesive agent, a layer of adhesive or self-adhesive agent may be provided on the composition 6 or the film 1 by a commonly used method at a separate step after the formation of the composition 6 so that the composition 6 and the film 1 can be laminated on each other with the layer of adhesive or self-adhesive agent interposed therebetween.

Further, a layer of adhesive or self-adhesive agent may be provided on the binder layer 7 and the binder layer 10 or the film 1 by a commonly used method at a separate step after the formation of the composition 6, the binder layer 7 and the binder layer 10 by the lamination of the aforesaid thermoplastic resin composition (a3) so that the binder layers 7 and 10 and the film 1 can be laminated on each other with the layer of adhesive or self-adhesive agent interposed therebetween. In this case, the binder layer 7 and the binder layer 10 each are an easily bondable layer.

As the adhesive or self-adhesive agent to be used in the binder layer 7 and the binder layer 10, the same adhesive or self-adhesive agent as previously mentioned are exemplified.

The thickness of the binder layer 7 or the binder layer 10 formed by the thermal lamination method is determined by the adhesion between the composition 6 and the film 1 or backing layer 9 and, in some detail, the layer of heat-sealable thermoplastic resin is normally provided by a melt-extrusion lamination method to a thickness of from 1 to 50 µm, preferably from 1 to 30 µm, particularly from 1 to 20 µm. In the case where the thickness of the binder layer 7 and the binder layer 10 falls below 1 µm, the adhesion is inadequate and doesn't meet the purpose of providing the binder layer 7 and the binder layer 10. When the thickness of the binder layer 7 and the binder layer 10 exceeds 60 µm, there is no further enhancement to adhesion and this is uneconomical.

Light reflector

The Clark rigidity of the light reflector of the present invention is preferably 85 or more, more preferably 90 or more both in the longitudinal direction (MD) and crosswise direction (CD). The Clark rigidity as used in the present invention means S value determined according to the method described in JIS-P8143. When the Clark rigidity of the light reflector is less than 85, the light reflector can easily undergo deflection during the use of the display which causes undesirable uneven illuminance in the surface direction of the display.

The tear strength of the light reflector of the present invention is preferably 100 gf, more preferably 120 g or more in both the longitudinal and crosswise directions. The tear strength as used in the present invention is a value determined according to the method described in JIS-P8116.

When the tear strength of the light reflector falls below 100 gf, the light reflector can easily undergo tension breakage at the portion at which it is screwed to the frame of the backlight unit, trimmed edge and seamed portion.

The thickness of the light reflector of the present invention preferably falls within the range of from 60 to 5, 000 µm, more preferably from 100 to 3,000 µm. The thickness as used in the present invention is a value determined according to the method described in JIS-P8118.

In the case where the thickness of the light reflector falls below 60 μm, the light reflector lacks rigidity as a light reflector and easily causes the occurrence of uneven illuminance and thus cannot meet the spirit of the present invention. In the case where the thickness of the light reflector exceeds 5,000 μm, the light reflector has too high a rigidity and hence insufficient workability and executability, making it impossible to meet the requirements for reduction of thickness and weight of recent liquid crystal display, etc.

The shape of the light reflector of the present invention is not specifically limited and can be properly determined according to the purpose or usage. The light reflector is normally used in the form of plate or film, but even if it is used in other forms, it is included within the scope of the present invention so far as it is used as a light reflector.

The light reflector of the present invention is useful as a light reflector for backlight unit and is extremely useful as a light reflector constituting a liquid crystal device or decorative illumination signboard regardless of whether the backlight unit is of side light type or vertical lighting type. The liquid crystal display device or decorative illumination signboard comprising the light reflector of the present invention causes the light reflector to reflect light from the light source uniformly and free from uneven illuminance in the surface direction and thus can give a natural feeling to viewers.

The light reflector of the present invention can be used not only for such a backlight type liquid crystal display device or decorative illumination signboard but also low-power consumption type display devices intended to reflect light from an indoor lamp without using any built-in light source. The light reflector of the present invention can be widely used as a light-reflecting material and also for the back surface of indoor and outdoor illumination light sources.

<Example>

The present invention will be further described hereinafter in the following examples and comparative examples. The following materials, amount, proportion, procedure, etc. can be properly changed so far as they don't deviate from the spirit of the present invention. Accordingly, the scope of the present invention is not construed as being limited by the following specific examples. The materials used in the following examples and comparative examples are set forth in Table 1 and the proportion of the various materials in the film 1 is set forth in Table 2.

Table 1

| Kind of material | Contents |
|---|---|
| PP1 | Propylene homopolymer (trade name: Novatec PPEA8, produced by Japan Polychem Corporation); MFR (230°C, 2.16 kg load) = 0.8 g/10 min |
| PP2 | Propylene homopolymer (trade name: Novatec PPMA4, produced by Japan Polychem Corporation); MFR (230°C, 2.16 kg load) = 5 g/10 min |
| HDPE | High density polyethylene (trade name: Novatec HDHJ360, produced by Japan Polychem Corporation); MFR (190°C, 2.16 kg load) = 5.5 g/10 min |
| PEB1 | Propylene-ethylene block copolymer (trade name: Novatec PPEC6, produced by Japan Polychem Corporation); MFR (230°C, 2.16 kg load) = 2.3 g/10 min |
| PEB2 | Propylene-ethylene block copolymer (trade name: Novatec PPBC8, produced by Japan Polychem Corporation); MFR (230°C, 2.16 kg load) = 1.8 g/10 min |
| Barium sulfate | Barium sulfate (trade name: B-55, produced by SAKAI CHEMICAL INDUSTRY CO., LTD.; average particle diameter: 0.5 μm |
| Titanium dioxide | Rutile titanium oxide (trade name: CR60, produced by ISHIHARA SANGYO KAISHA, LTD.; average particle diameter: 0.2 μm |
| Calcium carbonate 1 | Heavy calcium carbonate (trade name: Caltex 7, produced by MARUO CALCIUM CO., LTD.); average particle diameter: 0.97 μm |
| Calcium carbonate 2 | Heavy calcium carbonate (trade name: Softon 1800, produced by BIHOKU FUNKA KOGYO CO., LTD.); average particle diameter: 1.8 μm |
| Talc | Talc (trade name: PKP-53, produced by Fuji Talc Industrial Co., Ltd.; average particle diameter: 18.5 μm |

Table 2 (part 1)

| Mixing proportion (wt-%) of material | Composition (a) | Composition (b) | Composition (c) | Composition (d) | Composition (e) |
|---|---|---|---|---|---|
| PP1 | 29 | 61 | 29 | 59 | 74 |
| PP2 | – | – | – | – | – |
| HDPE | 6 | 4 | 6 | 6 | 10 |
| Barium sulfate | 60 | 30 | – | – | – |
| Titanium dioxide | 5 | 5 | 5 | 5 | – |
| Calcium carbonate 1 | – | – | 60 | 30 | – |
| Calcium carbonate 2 | – | – | – | – | 16 |

| Formulation of material | Contents |
|---|---|
| Composition (a) | obtained by melt-kneading a composition produced by mixing 29 wt-% of PP1, 6 wt-% of HDPE, 60 wt-% of barium sulfate and 5 wt-% of titanium dioxide using an extruder the temperature of which has been set at 250°C |
| Composition (b) | obtained by melt-kneading a composition produced by mixing 61 wt-% of PP1, 4 wt-% of HDPE, 30 wt-5% of barium sulfate and 5 wt-% of titanium dioxide using an extruder the temperature of which has been set at 250°C |
| Composition (c) | obtained by melt-kneading a composition produced by mixing 29 wt-% of PP1, 6 wt-% of HDPE, 60 wt-5% of calcium carbonate 1 and 5 wt-% of titanium dioxide using an extruder the temperature of which has been set at 250°C |
| Composition (d) | obtained by melt-kneading a composition produced by mixing 59 wt-% of PP1, 6 wt-% of HDPE, 30 wt-5% of calcium carbonate 1 and 5 wt-% of titanium dioxide using an extruder the temperature of which has been set at 250°C |
| Composition (e) | obtained by melt-kneading a composition produced by mixing 74 wt-% of PP1, 10 wt-% of HDPE and 16 wt-5% of calcium carbonate 2 using an extruder the temperature of which has been set at 250°C |

EP 1 542 042 A1

Table 2 (part 2)

| Mixing proportion (wt%) of material | Composition (f) | Composition (g) | Composition (h) | Composition (i) | Composition (j) | Composition (k) |
|---|---|---|---|---|---|---|
| PP1 | - | - | - | - | - | - |
| PP2 | 70 | 97 | 90 | 97 | 52 | 50 |
| HDPE | - | - | - | - | 3 | 50 |
| Barium sulfate | - | - | - | - | - | - |
| Titanium dioxide | 0.5 | 0.5 | 0.5 | 0.5 | - | - |
| Calcium carbonate 1 | 29.5 | 2.5 | - | - | - | - |
| Calcium carbonate 2 | - | - | 9.5 | 2.5 | 45 | - |

| Formulation of material | Contents |
|---|---|
| Composition (f) | obtained by melt-kneading a composition produced by mixing 70 wt-% of PP2, 29.5 wt-% of calcium carbonate 1 and 0.5 wt-% of titanium dioxide using an extruder the temperature of which has been set at 250°C |
| Composition (g) | obtained by melt-kneading a composition produced by mixing 97 wt-% of PP2, 2.5 wt-% of calcium carbonate 1 and 0.5 wt-% of titanium dioxide using an extruder the temperature of which has been set at 250°C |
| Composition (h) | obtained by melt-kneading a composition produced by mixing 90 wt-% of PP2, 9.5 wt-% of calcium carbonate 2 and 0.5 wt-% of titanium dioxide using an extruder the temperature of which has been set at 250°C |
| Composition (i) | obtained by melt-kneading a composition produced by mixing 97 wt-% of PP2, 2.5 wt-% of calcium carbonate 2 and 0.5 wt-% of titanium dioxide using an extruder the temperature of which has been set at 250°C |
| Composition (j) | obtained by melt-kneading a composition produced by mixing 52 wt-% of PP2, 3 wt-% of HDPE and 45 wt-% of titanium dioxide using an extruder the temperature of which has been set at 250°C |
| Composition (k) | obtained by melt-kneading a composition produced by mixing 50 wt-% of PP2 and 50 wt-% of HDPE using an extruder the temperature of which has been set at 250°C |

EP 1 542 042 A1

Production of film 1

(Production Example 1)

A composition (a) obtained by mixing PP1 and HDPE as olefin-based resin and barium sulfate and titanium dioxide as filler in a proportion set forth in Table 2 and a composition (g) obtained by mixing PP2 as olefin-based resin and calcium carbonate 1 and titanium dioxide as filler in a proportion set forth in Table 2 were melted and kneaded at 250°C using one extruder and two separate extruders, respectively.

These kneaded materials were fed into a co-extrusion die the temperature of which had been set at 250°C where they were then laminated in such an arrangement that the composition (a) was an interlayer (A) and the composition (g) was laminated on the interlayer (A) as a surface layer (B) and a back layer (C), respectively. Thereafter, the laminate was extruded to form a film which was then cooled over a cooling roll to about 60°C to obtain an unstretched laminate (B/A/C).

This laminate was heated to 145°C, stretched by a factor of 8 longitudinally by making the use of the difference in circumferential speed between many rolls, annealed at 160°C, cooled to 60°C, and then slit at the edge thereof to obtain a monoaxially-stretched three-layer film 1 having a thickness of 170 μm (B/A/C = 1 μm/168 μm/1 μm).

(Production example 2)

A composition (b) obtained by mixing PP1 and HDPE as olefin-based resin and barium sulfate and titanium dioxide as filler in a proportion set forth in Table 2 and a composition (i) obtained by mixing PP2 as olefin-based resin and calcium carbonate 2 and titanium dioxide as filler in a proportion set forth in Table 2 were melted and kneaded at 250°C using separate extruders.

A monoaxially-stretched three-layer film 1 having a thickness of 100 μm (B/A/C = 0.5 μm/99 μm/0.5 μm) was obtained in the same manner as in Production Example 1 except that the extrusion rate of these kneaded materials was changed.

(Production Example 3)

A monoaxially-stretched three-layer film 1 having a thickness of 180 μm (B/A/C = 0.5 μm/179 μm/0.5 μm) was obtained in the same manner as in Production Example 2 except that the extrusion rate of the various compositions was changed.

(Production Example 4)

A composition (c) obtained by mixing PP1 and HDPE as olefin-based resin and calcium carbonate 1 and titanium dioxide as filler in a proportion set forth in Table 2 and a composition (g) obtained by mixing PP2 as olefin-based resin and calcium carbonate 1 and titanium dioxide as filler in a proportion set forth in Table 2 were melted and kneaded at 250°C using separate extruders .

A monoaxially-stretched three-layer film 1 having a thickness of 97 μm (B/A/C = 1 μm/95 μm/1 μm) was obtained in the same manner as in Production Example 1 except that the extrusion rate of these kneaded materials was changed.

(Production Example 5)

A composition (d) obtained by mixing PP1 and HDPE as olefin-based resin and calcium carbonate 1 and titanium dioxide as filler in a proportion set forth in Table 2, a composition (f) obtained by mixing PP2 as olefin-based resin and calcium carbonate 1 and titanium dioxide as filler in a proportion set forth in Table 2 and a composition (g) obtained by mixing PP2 as olefin-based resin and calcium carbonate 1 and titanium dioxide as filler in a proportion set forth in Table 2 were melted and kneaded at 250°C using separate extruders.

These kneadedmaterials were fed into a co-extrusion die the temperature of which had been set at 250°C where they were then laminated in such an arrangement that the composition (d) was an interlayer (A) and the compositions (f) and (g) were laminated on the respective side of the interlayer (A) as a surface layer (B) and a back layer (C), respectively. Thereafter, the laminate was extruded to form a film which was then cooled over a cooling roll to about 60°C to obtain an unstretched laminate (B/A/C).

This laminate was heated to 145°C, stretched by a factor of 4.2 longitudinally by making the use of the difference in circumferential speed between many rolls to obtain a monoaxially-stretched film.

Subsequently, this monoaxially-stretched film was re-heated to 150°C, stretched by a tenter crosswise by a factor of 8.5, annealed at 160°C, cooled to 60°C, and then slit at the edge thereof to obtain a biaxially -stretched three-layer film 1 having a thickness of 112 µm (B/A/C = 1 µm/110 µm/1 µm).

(Production Example 6)

A composition (d) obtained by mixing PP1 and HDPE as olefin-based resin and calcium carbonate 1 and titanium dioxide as filler in a proportion set forth in Table 2, a composition (f) obtained by mixing PP2 as olefin-based resin and calcium carbonate 1 and titanium dioxide as filler in a proportion set forth in Table 2 and a composition (h) obtained by mixing PP2 as olefin-based resin and calcium carbonate 2 and titanium dioxide as filler in a proportion set forth in Table 2 were melted and kneaded at 250°C using separate extruders.
This laminate was heated to 145°C, stretched by a factor of 4 longitudinally by making the use of the difference in circumferential speed between many rolls to obtain a monoaxially-stretched film.
Subsequently, this monoaxially-stretched film was re-heated to 150°C, stretched by a tenter crosswise by a factor of 8, annealed at 160°C, cooled to 60°C, and then slit at the edge thereof to obtain a biaxially-stretched three-layer film 1 having a thickness of 100 µm (B/A/C = 0.5 µm/99 µm/0.5 µm).

(Production example 7)

A composition (d) obtained by mixing PP1 and HDPE as olefin-based resin and calcium carbonate 1 and titanium dioxide as filler in a proportion set forth in Table 2, a composition (f) obtained by mixing PP2 as olefin-based resin and calcium carbonate 1 and titanium dioxide as filler in a proportion set forth in Table 2 and a composition (i) obtained by mixing PP2 as olefin-based resin and calcium carbonate 2 and titanium dioxide as filler in a proportion set forth in Table 2 were melted and kneaded at 250°C using separate extruders.
A biaxially-stretched three-layer film 1 having a thickness of 150 µm (B/A/C = 1 µm/148 µm/1 µm) was obtained in the same manner as in Production Example 5 except that the extrusion rate of these kneaded materials was changed.

(Production Example 8)

A composition (d) obtained by mixing PP1 and HDPE as olefin-basedresinand calcium carbonate 1 and titanium dioxide as filler in a proportion set forth in Table 2 was melted and kneaded at 250°C using an extruder.
This kneaded material was fed into a die the temperature of which had been set at 250°C through which it was extruded to form a film which was then cooled over a cooling roll to about 60°C to obtain an unstretched film. This unstretched film was heated to 135°C, and then stretched longitudinally by a factor of 4.2 by making the use of the difference in circumferential speed between many rolls to obtain a monoaxially-stretched film.
A composition (k) obtained by mixing PP2 and HDPE as olefin-based resin in a proportion set forth in Table 2 was melted and kneaded at 250°C using separate extruders, and then fed into a die the temperature of which had been set at 250°C through which they were extruded to form films which were then extrusion-laminated on the respective side of the aforesaid 4.2-fold stretched film which is an interlayer (A) as a surface layer (B) and a surface layer (C), respectively. The laminated layers were then cooled to 60°C to obtain a three-layer laminate (B/A/C).
Subsequently, this laminate was re-heated to 150°C, stretched by a tenter crosswise by a factor of 8.5, annealed at 160°C, cooled to 60°C, and then slit at the edge thereof to obtain a three-layer film 1 having a thickness of 200 µm (B/A/C = 14 µm/172 µm/14 µm).

(Production Example 9)

A composition (e) obtained by mixing PP1 and HDPE as olefin-based resin and calcium carbonate 2 as filler in a proportion set forth in Table 2 was melted and kneaded at 250°C using an extruder.
This kneaded material was fed into a die the temperature of which had been set at 250°C through which it was extruded to form a film which was then cooled over a cooling roll to about 60°C to obtain an unstretched film. This unstretched film was heated to 135°C, and then stretched longitudinally by a factor of 4 by making the use of the difference in circumferential speed between many rolls to obtain a monoaxially-stretched film.
A composition (j) obtained by mixing PP2 and HDPE as olefin-based resin and calcium carbonate 2 in a proportion set forth in Table 2 was melted and kneaded at 250°C using separate extruders, and then fed into a die the temperature of which had been set at 250°C through which they were extruded to form films which were then extrusion-laminated on the respective side of the aforesaid 4-fold stretched film which is an interlayer (A) as a surface layer (B) and a surface layer (C), respectively. The laminated layers were then cooled to 60°C to obtain a three-layer laminate (B/A/C).
Subsequently, this laminate was re-heated to 150°C, stretched by a tenter crosswise by a factor of 9, annealed at 160°C, cooled to 60°C, and then slit at the edge thereof to obtain a three-layer film 1 having a thickness of 60 μm (B/A/C = 15 μm/30 μm/15 μm).

The area stretching factor, total light reflectance and filler proportion (content) of the various films 1 obtained in the aforesaid Production Examples 1 to 9 were as set forth in Table 3.

Table 3

| Production Example | Layer composition | | | Number of axes stretched | | | Layer thickness (μm) | | | | Foaming ratio | | | Total light reflect- ance (%) | Filler content (%) | Porosity (%) |
|---|---|---|---|---|---|---|---|---|---|---|---|---|---|---|---|---|
| | (B) | (A) | (C) | (B) | (A) | (C) | (B) | (A) | (C) | Total | Longi- tudinal | Cross- wise | Area | | | |
| 1 | (g) | (a) | (g) | 1 | 1 | 1 | 1 | 168 | 1 | 170 | 8 | - | 8 | 97.6 | 64 | 45 |
| 2 | (i) | (b) | (i) | 1 | 1 | 1 | 0.5 | 99 | 0.5 | 100 | 8 | - | 8 | 95.8 | 65 | 50 |
| 3 | (i) | (b) | (i) | 1 | 1 | 1 | 0.5 | 179 | 0.5 | 180 | 8 | - | 9 | 98.0 | 66 | 50 |
| 4 | (g) | (c) | (g) | 1 | 1 | 1 | 1 | 95 | 1 | 97 | 8 | - | 8 | 96.0 | 62 | 50 |
| 5 | (f) | (d) | (g) | 2 | 2 | 2 | 1 | 110 | 1 | 112 | 4.2 | 8.5 | 35.7 | 95.5 | 32 | 43 |
| 6 | (f) | (d) | (h) | 2 | 2 | 2 | 0.5 | 99 | 0.5 | 100 | 4 | 8 | 32 | 95.1 | 35 | 51 |
| 7 | (f) | (d) | (i) | 2 | 2 | 2 | 1 | 148 | 1 | 150 | 4.2 | 8.5 | 35.7 | 95.7 | 35 | 40 |
| 8 | (k) | (d) | (k) | 1 | 2 | 1 | 14 | 172 | 14 | 200 | 4.2 | 8.5 | 35.7 | 96.2 | 28 | 36 |
| 9 | (j) | (e) | (j) | 1 | 2 | 1 | 15 | 30 | 15 | 60 | 4 | 9 | 36 | 80.0 | 33 | 32 |

Production of substrate

In the examples of the present invention, as the substrates constituting the light reflector the following materials were used.

(Production Example 10)

(1) Film 2 comprising olefin-based resin or polyester-based resin as a main component:

A polyester film having a thickness of 100 μm (trade name: "0300E", produced by Mitsubishi Polyester Film Corp.) was used as film 2.

(Production Example 11)

(2) Woven cloth 3 or non-woven cloth 4:

A plain cloth (trade name: "Pongi #6575", produced by Toray Industries, Inc.; diameter of warp: 75 denier; diameter of woof: 75 denier; woven number of warp: 90 per 2.54 cm; woven number of woof: 85 per 2.54 cm; basis weight: 71 g/m$^2$) was used as woven cloth 3.

(Production Example 12)

A non-woven polyester cloth (trade name; "UniCell BT-0403W", produced by TEIJIN LIMITED) was used as a non-woven cloth 4.

(Production Example 13)

(3) Metal plate 5

A thin aluminum plate having a thickness of 200 μm (JIS-H4000, A3004P) was used as a metal plate 5.

(4) Molded material 6 comprising a thermoplastic resin composition (a1) containing a foaming agent and having a foaming ratio of from 1.05 to 10

(Production Example 14)

100 parts by weight of PEB1 as olefin-based resin were mixed with 3.5 parts by weight of a 1 : 1 mixture of monosodium citrate and sodium hydrogencarbonate as foaming agent to obtain a thermoplastic resin composition (a1) containing a foaming agent. On the other hand, 51% by weight of PEB2 as olefin-based resin were mixed with 49% by weight of talc as filler to obtain a thermoplastic resin composition (a2) containing a filler. Further, an ethylene-propylene copolymer having a melt flow rate (MFR: 190°C, 2.16 kg load) of 7 g/10 minutes was prepared as a thermoplastic resin composition (a3). These thermoplastic resin compositions were melted and kneaded using separate extruders. Using a feed block, these kneaded materials were then laminated to form a five-layer structure such that the thermoplastic resin composition (a1) containing a foaming agent was an interlayer, the thermoplastic resin composition (a2) containing a filler was an outer layer on the respective side of the interlayer and the thermoplastic resin composition (a3) which is a binder layer was an outermost layer on the outer layer. The laminate was then co-extruded through a T-die to obtain a three-layer composition 6 having a binder layer 7 and a binder layer 10 provided on the respective side thereof the interlayer of which had been expanded. The thickness of the composition 6 portion thus obtained was 750 μm (a2/a1/a2 = 56 μm/638 μm/56 μm), the proportion of the thickness of the thermoplastic resin composition (a2) containing a filler was 15%, and the foaming ratio was 3.1.

(Production Example 15)

A three-layer composition 6 having a binder layer 7 and a binder layer 10 provided on the respective side thereof was obtained in the same manner as in Production Example 3 except that the amount of the foaming agent and the extrusion rate of the thermoplastic resin were changed and the foaming ratio was 5.6. The thickness of the composition 6 portion thus obtained was 750 μm (a2/a1/a2 = 56 μm/638 μm/56 μm) and the proportion of the thickness of the thermoplastic resin composition (a2) containing a filler was 15%.

(Example 1)

A polyurethane-based anchor coating agent produced by Toyo Morton Ltd. (adhesive obtained by mixing trade name "BLS-2080A" and trade name "BLS-2080B" at a ratio of 1 : 1) was spread over the back layer (C) side of the film 1 obtained in Production Example 1 in such an amount that the dried spread was 3 g/m$^2$, and then dried. Subsequently, the film 2 obtained in Production Example 10 was dry-laminated on the coated material. Using a contact-bonding roll, the two layers were bonded to each other to obtain a light reflector having a layer structure (film 1/adhesive layer/film 2).

(Examples 2, 3)

A light reflector having a layer structure (film 1/adhesive layer/film 2) was obtained in the same manner as in Example 1 except that the film 1 and substrate to be used were changed to combination in various production examples set forth in Table 4.

(Example 4)

A polyurethane-based anchor coating agent produced by Toyo Morton Ltd. (adhesive obtained by mixing trade name "BLS-2080A" and trade name "BLS-2080B" at a ratio of 1 : 1) was spread over the back layer (C) side of the film 1 obtained in Production Example 4 in such an amount that the dried spread was 4 g/m$^2$, and then dried. Subsequently, the woven cloth 3 obtained in Production Example 11 was dry-laminated on the coated material. Using a contact-bonding roll, the two layers were bonded to each other to obtain a light reflector having a layer structure (film 1/adhesive layer/woven cloth 3).

(Example 5)

A light reflector having a layer structure (film 1/adhesive layer/woven cloth 3) was obtained in the same manner as in Example 4 except that the film 1 and substrate to be used were changed to combination in various production examples set forth in Table 4.

(Example 6)

A polyurethane-based anchor coating agent produced by Toyo Morton Ltd. (adhesive obtained by mixing trade name "BLS-2080A" and trade name "BLS-2080B" at a ratio of 1 : 1) was spread over the back layer (C) side of the film 1 obtained in Production Example 4 in such an amount that the dried spread was 4 g/m$^2$, and then dried. Subsequently, the non-woven cloth 4 obtained in Production Example 12 was dry-laminated on the coated material. Using a contact-bonding roll, the two layers were bonded to each other to obtain a light reflector having a layer structure (film1/adhesive layer/non-woven cloth 4).

(Example 7)

A light reflector having a layer structure (film 1/adhesive layer/non-woven cloth 4) was obtained in the same manner as in Example 6 except that the film 1 and substrate to be used were changed to combination in various production examples set forth in Table 4.

(Example 8)

An adhesive transferring tape (trade name: "F-9460PC", produced by Sumitomo 3M Co., Ltd.) was pressure-sensitive bonded to the back layer (C) side of the film 1 obtained in Production Example 5 via a contact-bonding roll. The laminate was then pressure-sensitive bonded to one side of the metal plate 5 obtained in Production Example 13 via a contact-bonding roll to obtain a light reflector having a layer structure (film 1/adhesive layer/metal plate 5).

(Comparative Example 1)

A light reflector having a layer structure (film 1/adhesive layer/metal plate 5) was obtained in the same manner as in Example 8 except that the film 1 to be used was changed to a vacuum-metallized PET film (trade name "ML-PET", produced by TOHCELLO CO,. LTD). This light had a high light reflectance but a high gloss and a glittering appearance due to specular reflection and caused the occurrence of uneven illuminance in the following testing examples.

(Comparative Example 2)

A light reflector having a layer structure (film 1/adhesive layer/metal plate 5) was obtained in the same manner as in Example 8 except that the film 1 to be used was changed to a white PET film (trade name "Lumirror E60L", produced by Toray Industries, Inc.). This light reflector had a high light reflectance and could difficultly caused the occurrence of uneven illuminance due to irregular reflection but was observed to undergo fading with time due to deterioration in the following testing examples.

(Examples 9, 10 and Comparative Example 3)

The films 1 obtained in Production Examples 2, 6 and 9 were each laminated on the both sides of the composition 6 of Production Example 14 which had been extruded through a T-die in such an arrangement that the back layer (C) came in contact with the composition 6 and pressure-fused to the composition 6 via a metal roll and a rubber roll while the composition 6 was being kept molten at a temperature of 180°C or more to obtain light reflectors of Examples 9 and 10 and Comparative Example 3, respectively.

(Example 11)

The film 1 obtained in Production Example 8 was laminated on the both sides of the composition 6 of Production Example 15 which had been extruded through a T-die in such an arrangement that the back layer (C) came in contact with the composition 6 and pressure-fused to the composition 6 via a metal roll and a rubber roll while the composition 6 was being kept molten at a temperature of 180°C or more to obtain a light reflector of Example 11.

(Example 12)

The composition 6 obtained in Production Example 14 was cooled over a cooling roll to obtain a film-like material.
At a separate step, a polyester-based anchor coating agent (AD-503, produced by Toyo Morton Ltd.) was spread over one side (binder layer 7 side) of the composition 6 as an adhesive in an amount of 4 g/m2 (as calculated in terms of solid content), and then dried to remove the solvent. Thereafter, the film 1 obtained in Production Example 2 was dry-laminated on the composition 6 in such an arrangement that the back layer (C) of the film 1 came in contact with the adhesive layer. The two layers were then bonded to each other via a contact-bonding roll to obtain a light reflector of Example 12.

(Comparative Examples 4 to 8)

The films 1 obtained in Production Examples 1, 3, 4, 5 and 7 were each used as a light reflector themselves.

(Testing Example 1)

The total light reflectance, filler content and porosity of the films 1 obtained in Production Examples 1 to 9 were measured or calculated by the aforementioned methods. The results are altogether set forth in Table 3.

(Testing Example 2)

The light reflectors of Examples 1 to 12 and Comparative Examples 1 to 8 were each evaluated for rigidity, brightness (illuminance), luminance unevenness and fading (yellowing) after continuous lighting of light source.
For the evaluation of rigidity, assuming handwork for mounting the light reflector on the backlight unit, touch on various light reflectors having a A3 size (297 x 420 mm) was organoleptically evaluated.

[Rigidity]

   O: Sufficient nerve, no deformation
   X: No nerve, some deflection or elongation

For the evaluation of brightness (illuminance) and uneven luminance in the surface direction, 18-inch type backlight unit was used. The light reflector was set and erected vertically between an acrylic light pipe having a white halftone printed thereon and a frame. The light reflector was then irradiated with light from a cold cathode lamp (inverter unit produced by Harrison Inc.; 12V, 6 mA tube current) at the upper and lower end surfaces thereof. After 3 hours, the illuminance and the occurrence of uneven luminance in the surface direction were then visually evaluated.

The purpose of conducting the evaluation after 3 hours is to confirm if the heat from the lamp caused deflection of the light reflector, resulting in the occurrence of uneven luminance.

[Brightness (Illuminance)]

O: Sufficient illuminance, high viewability
X: Insufficient illuminance, low viewability

[Uneven luminance]

O: Uniform luminance in the surface direction, no uneven luminance observed
X: Ununiform luminance in the surface direction, some uneven luminance observed

For the evaluation of fading with time due to deterioration of film during continuous lighting of light source, a Type SUV-W13 Eye Super UV tester (produced by IWASAKI ELECTRIC Co., Ltd.) was used. The light reflector was irradiated with light from a metal halide lamp disposed at a distance of 10 cm from the film side of the light reflector at 83°C and 50%RH and an illumination intensity of 90 mW/cm$^2$ for 10 hours. The color tone of the film was measured by a colorimeter (trade name "S&M Color Computer", produced by Suga Test Instruments Co., Ltd.) before and after test. The change of color tone of the film was determined by reading color difference $\Delta E_H$ from the value of various indices (JIS-Z8730) . The following evaluation was then conducted.

The term "color difference $\Delta E_H$" as used in the specification is color difference according to Hunter's color difference equation defined in JIS-Z8730 the value of which is calculated according to the following equation (3).

$$\Delta E_H = [(\Delta L)^2 + (\Delta a)^2 + (\Delta b)^2]^{1/2} \qquad (3)$$

In the equation (3), $\Delta E_H$ is the color difference according to Hunter's color difference equation, and $\Delta L$, $\Delta a$ and $\Delta b$ are the illuminance index L of the two surface colors in Hunter's color difference equation and the difference of chromaticness indices a, b, respectively.

[Fading after continuous lighting of light source]

O: No change of color tone ($\Delta E_H < 1$)
X: Some change of color tone ($\Delta E_H \geq 1$)

Comparative Example 2, where a white PET film was used as film 1, exhibited $\Delta E_H$ of 29.6, demonstrating that some change of color tone was observed, but all the other examples and comparative examples exhibited $\Delta E_H$ of less than 1.

The results of the various measurements in Testing Example 2 are altogether set forth in Table 4.

## Table 4

| Example/Comparative example | Film 1 | Substrate | Lamination method | Evaluation (Testing Example 2) | | | |
|---|---|---|---|---|---|---|---|
| | | | | Rigidity | Illuminance | Uneven luminance | Fading |
| Example 1 | Production Example 1 | Production Example 10 (polyester film 2) | Dry lamination | O | O | O | O |
| Example 2 | Production Example 5 | Production Example 10 (polyester film 2) | Dry lamination | O | O | O | O |
| Example 3 | Production Example 7 | Production Example 10 (polyester film 2) | Dry lamination | O | O | O | O |
| Example 4 | Production Example 4 | Production Example 11 (woven cloth 3) | Dry lamination | O | O | O | O |
| Example 5 | Production Example 5 | Production Example 11 (woven cloth 3) | Dry lamination | O | O | O | O |
| Example 6 | Production Example 4 | Production Example 12 (non-woven cloth 4) | Dry lamination | O | O | O | O |
| Example 7 | Production Example 5 | Production Example 12 (non-woven cloth 4) | Dry lamination | O | O | O | O |
| Example 8 | Production Example 5 | Production Example 13 (metal plate 5) | Dry lamination | O | O | O | O |
| Example 9 | Production Example 2 | Production Example 14 (composition 6) | Thermal lamination | O | O | O | O |
| Example 10 | Production Example 6 | Production Example 14 (composition 6) | Thermal lamination | O | O | O | O |
| Example 11 | Production Example 8 | Production Example 15 (composition 6) | Thermal lamination | O | O | O | O |

| | | | | | | | |
|---|---|---|---|---|---|---|---|
| Example 12 | Production Example 2 | Production Example 14 (composition 6) | Dry lamination | O | O | O | O |
| Comparative Example 1 | Aluminum vacuum-plated PET film | Production Example 13 (metal plate 5) | Dry lamination | O | O | X | O |
| Comparative Example 2 | White PET film | Production Example 13 (metal plate 5) | Dry lamination | O | O | O | X |
| Comparative Example 3 | Production Example 9 | Production Example 14 (composition 6) | Thermal lamination | O | X | O | O |
| Comparative Example 4 | Production Example 1 | – | – | X | O | X | O |
| Comparative Example 5 | Production Example 3 | – | – | X | O | X | O |
| Comparative Example 6 | Production Example 4 | – | – | X | O | X | O |
| Comparative Example 7 | Production Example 5 | – | – | X | O | X | O |
| Comparative Example 8 | Production Example 7 | – | – | X | O | X | O |

While the present invention has been described in detail and with reference to specific embodiments thereof, it will be apparent to one skilled in the art that various changes and modifications can be made therein without departing from the spirit and scope thereof.

The present application is based on Japanese Patent Application No. 2002-214682 filed on July 24, 2002, Japanese Patent Application No. 2002-298156 filed on October 11, 2002, Japanese Patent Application No. 2002-335917 filed on November 20, 2002, and Japanese Patent Application No. 2002-103528 filed on April 8, 2003, and their contents are hereby incorporated by reference.

<Industrial Applicability>

As mentioned above, in accordance with the present invention, a light reflector having a high reflectance which has a rigidity high enough to inhibit the occurrence of uneven illuminance in the surface direction due to the device form (strain) or deflection during use is realized. The light reflector attains a uniform luminance in the surface direction over an extended period of time in an area light source device.

**Claims**

1. A light reflector comprising: an olefin-based resin film 1 comprising a filler and having a total ray reflectance of 90% or more, wherein the olefin-based resin film 1 is stretched at least monoaxially at an area stretch ratio of from 1.5 to 80; and at least one of the following substrates (1) to (4):

    (1) Film 2 comprising at least one of an olefin-based resin and a polyester-based resin as a main component;
    (2) a Woven cloth 3 or a non-woven cloth 4;
    (3) a Metal plate 5; and
    (4) a Molded material 6 comprising a thermoplastic resin composition (a1) containing a foaming agent and having a foaming ratio of from 1.05 to 10 as calculated by the following equation (1):

$$\text{Foaming ratio} = \rho o/\rho \qquad (1)$$

    where $\rho o$ represents the density before foaming; and $\rho$ represents the density after foaming.

2. The light reflector as claimed in Claim 1, wherein the light reflector has a Clark rigidity of 85 or more.

3. The light reflector as claimed in Claim 1 or 2, wherein the light reflector has a tear strength of 100 gf or more in both directions.

4. The light reflector as claimed in any one of Claims 1 to 3, further comprising a binder layer 7 between the substrate and the film 1.

5. The light reflector as claimed in any one of Claims 1 to 4, further comprising a protective layer 8 on the film 1.

6. The light reflector as claimed in any one of Claims 1 to 5, further comprising a backing layer 9 on the substrate.

7. The light reflector as claimed in Claim 6, further comprising a binder layer 10 between the substrate and the backing layer 9.

8. The light reflector as claimed in any one of Claims 1 to 7, wherein the content of filler in the film 1 is from 5 to 75% by weight.

9. The light reflector as claimed in any one of Claims 1 to 8, wherein the film 1 has a multilayer structure.

10. The light reflector as claimed in any one of Claims 1 to 9, wherein the film 1 has a porosity of from 15 to 70% as calculated by the following equation (2):

$$\text{Porosity (\%)} = (\rho o' - \rho')/\rho o' \times 100 \qquad (2)$$

where ρo' represents the density before stretching; and p' represents the density after stretching.

11. The light reflector as claimed in any one of Claims 1 to 10, wherein the molded material 6 has a multilayer structure comprising: a layer containing a thermoplasticresincomposition (a1) containing a foaming agent; and a layer containing a thermoplastic resin composition (a2) containing a filler.

12. The light reflector as claimed in Claim 11, wherein the thermoplastic resin composition (a1) containing a foaming agent and the thermoplastic resin composition (a2) containing a filler comprises an olefin-based resin.

13. The light reflector as claimed in any one of Claims 1 to 12, which is obtained by pressure-fusing and laminating the film 1 on at least one side of the molded material 6 that is extruded through a die and molded in a film-shape, while the molded material 6 is in a molten state.

14. The light reflector as claimed in any one of Claims 4 to 13, which is obtained by pressure-fusing and laminating the film 1 on the binder layer 7 of the molded material 6 and the binder layer 7 that are extruded through a die and integrally molded in a film-shape, while the molded material 6 and the binder layer 7 are in a molten state.

15. The light reflector as claimed in any one of Claims 4 to 14, which is obtained by laminating the film 1 and the binder layer 7 on each other via an adhesive layer or self-adhesive agent layer.

16. The light reflector as claimed in any one of Claims 7 to 15, which is obtained by pressure-fusing and laminating the backing layer 9 on the binder layer 10 of the molded material 6 and the binder layer 10 that are extruded through a die and integrally molded in a film-shape, while the molded material 6 and the binder layer 10 are in a molten state.

17. The light reflector as claimed in any one of Claims 7 to 18, which is obtained by laminating the backing layer 9 and the binder layer 10 on each other via an adhesive layer or self-adhesive agent layer.

18. The light reflector as claimed in any one of Claims 4 to 17, wherein the binder layer 7 and the binder layer 10 comprise a heat-sealable thermoplastic resin composition (a3).

19. The light reflector as claimed in any one of Claims 6 to 18, wherein the backing layer 9 comprises at least one of olefin-based resin and polyester-based resin as a main component.

20. The light reflector as claimed in any one of Claims 1 to 19, wherein the olefin-based resin comprises at least one of propylene-based resin and ethylene-based resin as a main component.

21. The light reflector as claimed in any one of Claims 1 to 20, wherein the filler is at least one of finely divided inorganic powder and organic filler.

22. The light reflector as claimed in any one of Claims 1 to 21, which has a thickness of from 60 to 5,000 μm.

23. A backlight unit comprising the light reflector as claimed in any one of Claims 1 to 22.

24. A decorative illumination signboard comprising the light reflector as claimed in any one of Claims 1 to 22.

25. An illuminating device comprising the light reflector as claimed in any one of Claims 1 to 22.

Fig. 1

LCD Cell

14

11

15

15

Fig. 2

13

14

16

15

12

11

<div align="center">

**INTERNATIONAL SEARCH REPORT**

</div>

| | International application No. |
|---|---|
| | PCT/JP03/09345 |

**A. CLASSIFICATION OF SUBJECT MATTER**
Int.Cl⁷ G02B5/08, G09F13/14, B32B27/32, F21V8/00, F21Y103/00, F21S1/00

According to International Patent Classification (IPC) or to both national classification and IPC

**B. FIELDS SEARCHED**

Minimum documentation searched (classification system followed by classification symbols)
Int.Cl⁷ G02B5/08, G09F13/14, B32B27/32, F21V8/00, F21Y103/00, F21S1/00

Documentation searched other than minimum documentation to the extent that such documents are included in the fields searched
Jitsuyo Shinan Koho 1922–1996 Toroku Jitsuyo Shinan Koho 1994–2003
Kokai Jitsuyo Shinan Koho 1971–2003 Jitsuyo Shinan Toroku Koho 1996–2003

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | US 5672409 A (Toray Industries, Inc.), 30 September, 1997 (30.09.97), Full text | 1,5,6,8,9, 11-13,20-23, 25 |
| Y | & JP 4-239540 A | 10,14,15,24 |
| X | JP 7-230004 A (Mitsui Toatsu Chemicals, Inc.), 29 August, 1995 (29.08.95), | 1,4,6,7,9, 10,18-23,25 |
| Y | Full text (Family: none) | 2,3,5,8,11, 12,15,17,24 |
| Y | US 5746857 A (Tomoegawa Paper Co., Ltd.), 05 May, 1998 (05.05.98), Full text & JP 7-281010 A | 11,12 |

☒ Further documents are listed in the continuation of Box C. ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 27 October, 2003 (27.10.03) | 11 November, 2003 (11.11.03) |

| Name and mailing address of the ISA/ | Authorized officer |
|---|---|
| Japanese Patent Office | |
| Facsimile No. | Telephone No. |

Form PCT/ISA/210 (second sheet) (July 1998)

**EP 1 542 042 A1**

## INTERNATIONAL SEARCH REPORT

| International application No. |
|---|
| PCT/JP03/09345 |

C (Continuation).   DOCUMENTS CONSIDERED TO BE RELEVANT

| Category* | Citation of document, with indication, where appropriate, of the relevant passages | Relevant to claim No. |
|---|---|---|
| Y<br>A | JP 2-147641 A   (Diafoil Co., Ltd.),<br>06 June, 1990 (06.06.90),<br>Full text<br>(Family: none) | 23-25<br>1-3,8,10,<br>20-22 |

Form PCT/ISA/210 (continuation of second sheet) (July 1998)

30